# FASCICULE DE BREVET EUROPEEN

(11) **EP 3 767 199 B1**
(45) Date de publication et mention de la délivrance du brevet: **10.01.2024**
(21) Numéro de dépôt: 20185310.8
(22) Date de dépôt: 10.07.2020
(51) Int. Cl.: F24H 4/02, F24H 4/04, F24H 9/06, F24H 9/12, F24H 9/14, F24D 3/08, F24D 11/02, F24D 17/02, F24H 9/13

(54) **DISPOSITIF DE CHAUFFAGE D'EAU À POMPE À CHALEUR**
WASSERHEIZVORRICHTUNG MIT WÄRMEPUMPE
WATER HEATING DEVICE WITH HEAT PUMP

(30) Priorité: 12.07.2019 FR 1907843
(43) Date de publication de la demande: 20.01.2021
(73) Titulaire: BDR Thermea Group, 67580 Mertzwiller (FR)
(72) Inventeur: SIEGEL, Olivier, 67550 Vendenheim (FR); BLOSS, Mickaël, 67203 Oberschaeffolsheim (FR); KIEFFER, Damien, 67350 UHRWILLER (FR)
(74) Mandataire: Dennemeyer & Associates S.A.

(56) Documents cités:
- EP-A1- 3 184 930
- EP-A1- 3 508 798
- EP-A2- 1 275 910
- EP-A2- 2 484 990
- DE-U1-202018 001 089
- FR-A1- 3 064 723
- SE-C2- 509 738

## Description

La présente invention s'applique au domaine technique du chauffage domestique de l'eau, pour la production d'eau chaude sanitaire aussi bien que pour l'alimentation de circuits de chauffage installés sur les parois ou dans des sols d'immeubles. Plus particulièrement, l'invention s'applique à un dispositif de chauffage d'eau de type armoire posée au sol et qui intègre la technologie des pompes à chaleur, nécessitant par conséquent un groupe extérieur alors que la plus grande partie du dispositif se trouve à l'intérieur du bâtiment, impliquant la gestion d'un circuit supplémentaire et des opérations de raccordement en conséquence.

De manière générale, dès lors qu'il y a gestion de plusieurs circuits hydrauliques/fluidiques/frigorifiques et qu'on prévoit une centralisation des commandes/contrôles de ces circuits dans un dispositif fixe, la question de la connectique s'impose comme un enjeu important de l'installation. Lors de la construction de bâtiments neufs, en particulier, la réalisation des connexions et raccordements suscite notamment des problématiques liées aux diverses opérations de construction/installation nécessitant des corps de métiers très différents, qui se succèdent sur les chantiers. Ainsi, dans l'exemple du chauffage par le sol, le premier corps de métier à intervenir est celui des chauffagistes qui mettent en place les circuits de chauffage adéquats, sous la surface de ce qui sera ensuite le sol. Ensuite, un chapiste doit intervenir pour réaliser ledit sol, avant que le chauffagiste ne revienne pour finaliser les raccordements notamment à la structure de commande. D'autres exemples du même type pourraient aisément être trouvés, montrant que la succession logique des tâches ne permet pas toujours d'optimiser les déplacements des uns et des autres.

Quand on connaît les problèmes de gestion des emplois du temps sur les chantiers, occasionnant souvent des dérives dans les prévisionnels des travaux, la nécessité pour un corps de métier de se déplacer à plusieurs reprises n'est jamais une bonne chose, et c'est une situation que l'on cherche naturellement à éviter. C'est l'un des axes de réflexion principaux qui a abouti à la conception de la présente invention, laquelle a été pensée pour optimiser toutes les interventions techniques sur le dispositif de chauffage de l'invention, au départ lors de la construction, puis au cours de la vie du produit.

A cet effet, il a déjà été proposé des configurations visant à regrouper en un endroit au moins un certain nombre de connexions avec des circuits hydrauliques réalisés dans le bâtiment, de manière à faciliter le raccordement du dispositif de chauffage avec les arrivées/départs à disposition. Ainsi, les dosserets solidarisés aux parois des immeubles auxquels sont ensuite fixées les chaudières murales représentent une possibilité, tel que par exemple décrite dans le document FR 3 064 723, de centralisation de raccordement à des circuits hydrauliques du bâtiment. Les dosserets ne concernent cependant que les installations murales, qu'ils contribuent d'ailleurs à fixer aux murs.

EP 3184930 A1 divulgue un exemple de dispositif de chauffage d'eau à pompe à chaleur avec un module intérieur fixé au mur.

SE 509738 C2 divulgue un dispositif de chauffage d'eau à pompe à chaleur avec un module intérieur disposé au sol.

Dans le cadre de la présente invention, la conception intègre la problématique du volume effectivement occupé dans le bâtiment, et notamment son empreinte au sol, la surface au sol utile dans l'habitat neuf étant chère et le devenant de plus en plus. Dans cette perspective, les enseignements techniques des solutions de type dosserets ne sont d'aucune utilité, d'une part car le volume du dosseret s'ajoute à celui de la chaudière murale et ne procure aucun gain de place et d'autre part car, la chaudière étant fixée sur une paroi, elle n'occupe pas de surface au sol.

L'invention, qui est une structure de type armoire disposée au sol, doit conserver la même empreinte au sol nonobstant l'existence d'un système de regroupement des raccordements aux circuits hydrauliques externes, et permettre de réaliser facilement les connexions à ce système, ce qui implique des conditions autant pour la mise en place de cette armoire que pour la réalisation desdites connexions. L'invention a, finalement, pour objectif de mettre en oeuvre un système de type « plug and play », facilitant au maximum l'installation finale de l'armoire lorsque le système de regroupement des raccordements est présent.

Ainsi, le dispositif de chauffage d'eau à pompe à chaleur de l'invention, destiné comme on l'a mentionné à équiper des locaux d'immeubles et de maisons individuelles comportant au moins un circuit d'eau chaude sanitaire et au moins un circuit de chauffage, est composé d'un module intérieur comportant un ballon d'eau chaude et le condenseur de la pompe à chaleur, et d'un groupe extérieur de la pompe à chaleur comportant un évaporateur, un réducteur de pression et un compresseur. Il est tel que le module intérieur comporte deux parties séparées, une unité mobile sous forme d'une armoire disposé au sol déplaçable et une platine fixe comportant des moyens de solidarisation à une paroi de l'immeuble ou de l'habitation, ladite platine comportant des moyens de liaison entre l'unité mobile et d'une part les circuits respectivement d'eau chaude sanitaire et de chauffage et d'autre part le groupe extérieur de la pompe à chaleur, l'unité mobile comportant un espace libre à l'intérieur du volume de l'armoire apte à loger ladite platine et débouchant dans la paroi de l'armoire opposée à sa façade.

L'invention propose par conséquent de mettre en place une structure qui regroupe la connectique et qui soit fixe, facile d'accès notamment parce qu'elle est aisément dissociable de l'unité mobile, et surtout installable très tôt dans la construction des locaux puisqu'elle ne nécessite que l'existence d'une paroi de l'immeuble. Ainsi, pour reprendre l'exemple précité d'un circuit de chauffage par les sols, l'installateur chauffagiste peut d'emblée, lors de l'installation dudit circuit, réaliser toutes les connexions sur la platine préalablement fixée à une paroi. Plus généralement, au cours de son passage, il effectue les opérations qualifiées, qui concernent principalement les connexions aux différents circuits aux moyens de liaison de la platine fixe. Seules restent alors à réaliser les raccordements desdits moyens de liaison avec les portions de circuits de l'unité mobile, ce qui est immédiat et ne nécessite pas de compétences particulières, du fait de la correspondance des positionnements des tubulures à raccorder, qui dépendent en réalité du positionnement des moyens de liaison sur la platine pour ce qui concerne les conduits provenant des circuits extérieurs, et ne peuvent être raccordé qu'à un conduit dans l'unité mobile.

L'empreinte au sol de l'armoire de l'unité mobile n'est pas modifiée par les incidences de raccordement, puisque la platine qui regroupe l'ensemble des connexions avec les circuits du bâtiment est complètement logée à l'intérieur du volume de l'armoire.

De fait, la platine fixe comporte selon l'invention des premiers moyens de raccordement de tubulures issues des circuits hydrauliques de chauffage et d'eau chaude sanitaire et des conduits correspondant de l'unité mobile, et des seconds moyens de raccordement séparés pour les tubulures frigorifiques issues du groupe extérieur de la pompe à chaleur et les conduits frigorifiques reliés au condenseur de l'unité mobile. Comme mentionné, compte tenu de leurs localisations respectives sur la platine et dans l'unité mobile, et de leur référencement/identification dans ces deux parties, le raccordement - qui ne pose par ailleurs aucun problème technique - est immédiat et ne nécessite pas de savoir-faire professionnel particulier, sauf peut-être pour la partie frigorifique qui nécessite d'être habilité à la manipulation de fluides frigorifiques. Il concerne deux types de circuits, les circuits dits hydrauliques qui véhiculent de l'eau, et les circuits frigorifiques qui véhiculent le liquide frigorigène entre les deux parties extérieure et intérieure de la pompe à chaleur.

En pratique et selon une configuration de l'invention, lesdits moyens de connexion consistent en des robinets et, plus particulièrement, en des robinets multi-fonctions qui peuvent comporter un robinet de purge, un clapet anti-retour et des moyens d'isoler de l'unité mobile les circuits de chauffage et d'eau chaude sanitaire d'une part et le groupe extérieur de la pompe à chaleur d'autre part. Ces robinets comportent des moyens de liaison classiques aux conduits qu'ils raccordent, dont seuls ceux qui réalisent la connexion avec l'unité mobile restent à raccorder, ce qui est en l'espèce parfaitement possible en l'absence du chauffagiste professionnel.

Cela résulte du fait que, la platine ayant été préalablement montée fixe à une paroi de l'immeuble convenablement choisie par le chauffagiste au cours de son intervention, il s'est lui-même chargé de la connexion avec les circuits de chauffage et d'eau chaude sanitaire et avec le groupe extérieur de la pompe à chaleur, organisant et sélectionnant les conduits appropriés à cet effet.

Selon l'invention, la platine comporte à cet effet un cadre muni de moyens de positionnement et de fixation à la paroi de l'immeuble et une console munie des moyens de liaison. La console se développe selon une orientation horizontale, les moyens de liaison étant disposés au voisinage de l'extrémité libre de la console, de préférence alignés horizontalement. Cette console dépasse par conséquent de la paroi dans une direction d'allure perpendiculaire à cette dernière, de manière à pouvoir s'insérer dans l'espace disponible ménagé à cet effet dans l'armoire formant l'unité mobile. Elle porte les robinets de liaison, déjà raccordée aux différents circuits d'eau de la maison, et qu'il suffit de connecter à l'intérieur de ladite unité mobile pour achever l'installation. Ceux-ci sont agencés de manière à faciliter la connexion à l'intérieur de l'armoire, et viennent en regard de connecteurs placés dans l'armoire lorsque celle-ci est déplacée en vue de loger la console à l'intérieur de son volume.

De fait, l'unité mobile comporte des connecteurs pour le raccordement aux moyens de liaison, accessibles par sa façade, et alignés chacun avec un des moyens de liaison lorsque la platine est logée à l'intérieur du volume de l'armoire formant l'unité mobile.

Pour sécuriser les arrivées des différents conduits qui viennent s'y connecter, le cadre de la platine peut comporter des orifices de passage et de guidage des tubulures issues des circuits de chauffage et d'eau chaude sanitaire d'une part et du groupe extérieur de la pompe à chaleur d'autre part. On évite ainsi en particulier de soumettre les parties terminales des tubulures à des contraintes qui pourraient ensuite affaiblir les connexions, ou les rendre moins pérennes si elles sont soumises épisodiquement à ces contraintes dues par exemple à un mauvais positionnement relatif.

Selon une configuration possible, la console peut comporter un bac situé sous les moyens de liaison, et un conduit d'évacuation de liquides, ledit conduit débouchant dans le bac. Ce conduit a pour objet de véhiculer les liquides collectés sous les vannes de liaison, notamment lors des opérations de raccordement, au circuit d'évacuation des eaux usées de l'immeuble.

Pour permettre et faciliter son déplacement, l'unité mobile comporte au moins une paire de roues au voisinage de la paroi de l'unité mobile dans laquelle débouche l'espace libre apte à loger la platine. Il suffit à l'opérateur de véhiculer l'unité mobile, supportée par les roues en question, en maintenant l'ouverture de cet espace centrée en face de la platine fixée au mur pour que cette dernière s'y insère, conduisant à une limitation conséquente de l'emprise au sol de l'ensemble unité mobile/platine puisque les tuyauteries arrivant des différents circuits n'en dépassent que d'une manière minimale, comme on le verra dans la suite.

L'invention concerne également un procédé d'installation du dispositif dont il a été fait état auparavant dans un immeuble, consistant en :
- utilisation d'un gabarit de mesure donnant les positions de fixation des moyens de fixation de la platine par rapport à une mesure de hauteur au sol tracée sur le gabarit ;
- fixation de la platine à la paroi de l'immeuble ;
- raccordement aux moyens de liaison des conduits issus des circuits de chauffage et d'eau chaude sanitaire d'une part et du groupe extérieur de la pompe à chaleur d'autre part ;
- déplacement de l'unité mobile de manière à y loger la platine dans un espace disponible ; et
- raccordement des conduits internes de l'unité mobile aux moyens de liaison de la platine.

Pour faciliter son installation, le dispositif de l'invention est donc accompagné d'un gabarit d'installation qui permet un repérage facile des positions importantes, celles qui sont relatives à la fixation à bonne hauteur de la platine, de sorte que lorsque cette dernière est fixée au mur, le déplacement de l'unité mobile vers elle - en centrant l'espace de logement de la platine - permette une insertion immédiate avec un positionnement correct de l'une par rapport à l'autre. En conséquence, les robinets de liaison se retrouvent immédiatement en face des tubulures auxquelles ils doivent être raccordés.

L'invention va à présent être décrite en référence à des figures jointes en annexe, illustrant un exemple de mise en oeuvre possible de l'invention, qui n'en est cependant pas limitatif, et dans lesquelles :
La figure 1 représente le circuit global d'une installation intégrant un dispositif selon la présente invention ;
La figure 2 montre de manière schématique le fonctionnement de l'invention ;
La figure 3 représente, en vue perspective, une version possible d'une platine du dispositif selon l'invention ;
La figure 4 montre une unité mobile du dispositif de chauffage, en vue en élévation ;
La figure 5 illustre la mise en oeuvre des parties fixe et mobile d'un dispositif de chauffage d'eau conforme à l'invention, en vue de son raccordement final ;
La figure 6 est une vue en perspective partielle du dispositif de l'invention en phase assemblée, platine insérée dans l'unité mobile ; et.
La figure 7 en montre une vue de côté, montrant notamment le volume réduit et optimisé qui subsiste entre la paroi de l'immeuble à laquelle est fixée la platine de l'invention et l'unité mobile.

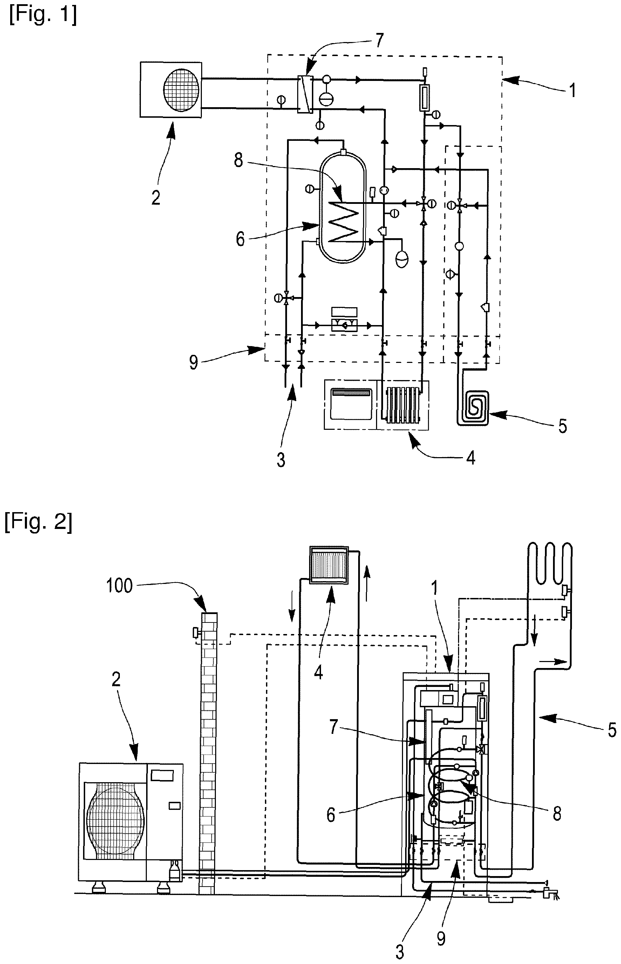

En référence à la figure 1, l'unité mobile 1 du dispositif est symbolisée par la surface délimitée par des traits pointillés. La platine dotée des moyens de liaison n'apparaît pas sur cette figure, qui se contente d'illustrer de manière schématique les différents circuits centralisés et organisés au niveau de ladite unité mobile 1, y faisant ressortir les incidences en termes de connectique. Ainsi, cette unité 1 qui regroupe notamment le contrôle et la commande des différents circuits hydrauliques et frigorifique, est raccordée à un groupe extérieur 2 de pompe à chaleur, à un circuit d'eau chaude sanitaire 3, à un circuit de chauffage mural 4 incluant par exemple des radiateurs ou des ventilo-convecteurs, et à un plancher chauffant 5. Jusqu'ici, toutes les connexions étaient gérés séparément, d'où la problématique mentionnée auparavant quant aux rotations des corps de métier : le chauffagiste, par exemple, met en place la circuiterie hydraulique du chauffage au sol, puis laisse la place à un chapiste pour la pose du sol proprement dit, avant de revenir pour réaliser les dernières connexions à la structure de production d'eau chaude, quelle qu'elle soit, et au système de contrôle et de gestion de ladite circuiterie d'eau du sol. L'unité intérieure 1 comporte aussi un ballon d'eau chaude 6, alimentant le circuit d'eau chaude sanitaire 3, et le condenseur 7 de la pompe à chaleur restituant la chaleur provenant de la transformation en phase liquide du liquide frigorigène, en vue de chauffer l'eau alimentant d'une part les différents circuits de chauffage externes 4, 5, et d'autre part un échangeur 8 de chauffage de l'eau du ballon 6. Les différents composants (vannes, circulateurs, soupape, vase d'expansion etc..) du circuit hydraulique interne à l'unité 1 ne sont pas décrits en détail, car ils ne sont pas l'objet de la présente invention. De même, les configurations précises des circuits hydrauliques d'eau sanitaire, de chauffage et du circuit frigorifique du groupe extérieur 2 de la pompe à chaleur, avec leurs composants propres (thermostats, compresseur, évaporateur..) ne sont pas davantage explicités.

Il est à noter que les moyens de raccordement de la circuiterie interne à l'unité mobile 1 avec les circuits extérieurs sont regroupés, comme on le verra plus tard de manière plus détaillée, dans une partie inférieure de l'unité 1, au voisinage immédiat de l'espace disponible prévu pour loger la platine 20, dans une zone qui est schématisée, dans la figure 1, par la bande 9 entourée de traits pointillés. La figure 2 reprend de manière plus structurelle le schéma de la figure 1, en sorte que l'unité 1 est notamment montrée dans une forme, certes toujours schématique, mais plus proche de sa structure réelle, sous forme d'armoire intégrant le ballon d'eau chaude et les composants centralisés du système multi-circuits. Cette figure fait également mieux apparaître l'existence, dans le bas de l'armoire, de moyens de connexion alignés dans la zone en traits pointillés 9. Elle montre enfin la séparation, ici au moyen d'un mur 100, entre l'intérieur du bâtiment et l'extérieur, au niveau duquel le groupe extérieur 2 de la pompe à chaleur est immobilisé.

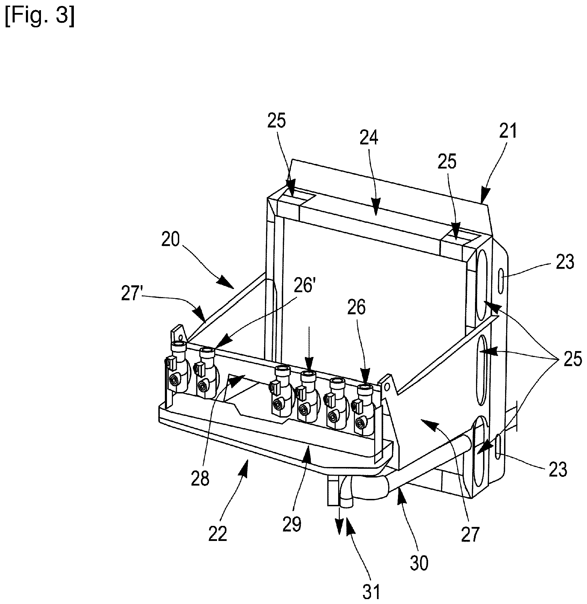

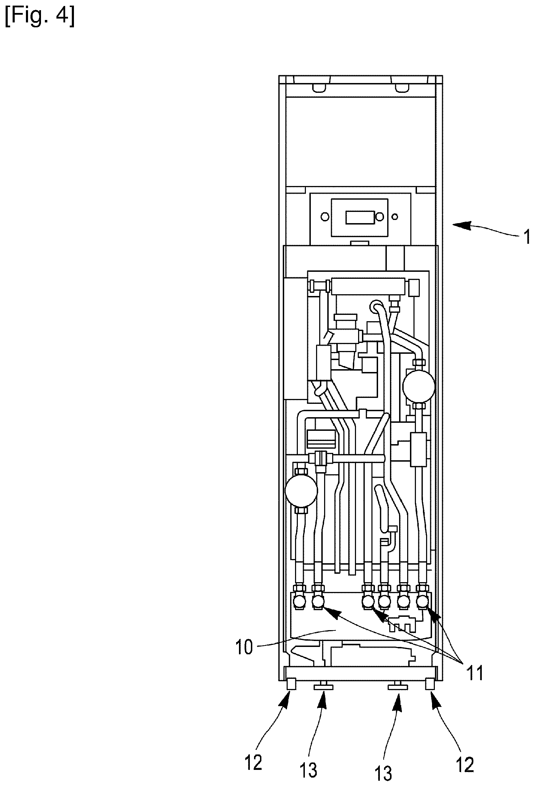

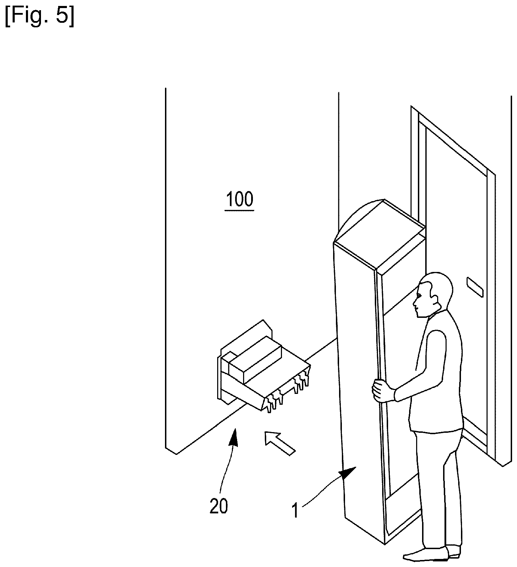

Les exemples donnés en figures 1 et 2 concernent des configurations à deux circuits de chauffage 4 et 5, un chauffage mural et un chauffage par le plancher, mais il est bien entendu que d'autres configurations peuvent aussi convenir, dans le cadre de l'invention. Ainsi, il est courant qu'un seul circuit de chauffage soit employé, selon la nature de l'habitat qui en est équipé. C'est par exemple le cas de la configuration à laquelle se réfère la figure 3, qui montre une platine 20 équipée de moyens de liaison avec un circuit de chauffage 4 ou 5 et un circuit d'eau chaude sanitaire 3, platine 20 prévue pour coopérer avec une unité mobile 1 telle que représentée à la figure 4, selon des modalités d'assemblage final qui apparaissent en figure 5.

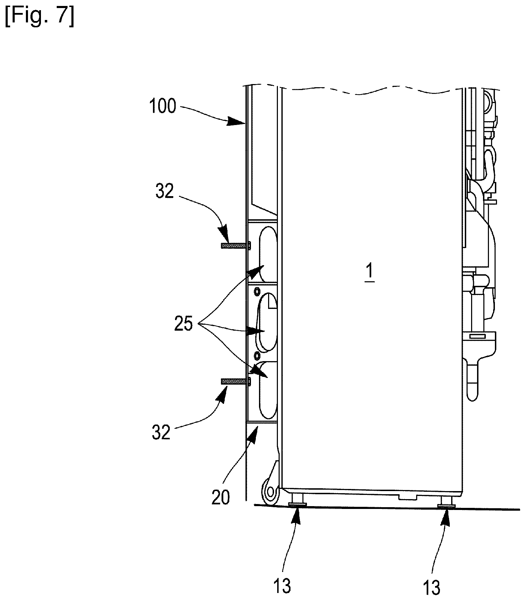

La platine 20 comporte un cadre 21 destiné à être fixé à une paroi telle que la paroi 100 de la figure 2, et une console 22 qui en dépasse dans une direction sensiblement perpendiculaire, et qui est prévue pour s'insérer dans un espace disponible 10 situé en partie inférieure de l'unité mobile 1 (voir en figure 4), à l'intérieur du carter de cette unité mobile, de sorte que lorsque celle-ci est poussée contre la paroi 100, la console 22 s'étendant dans une orientation horizontale est absorbée à l'intérieur dudit carter. Le cadre 21 comporte au moins trois ailettes périphériques dont au moins deux d'entre elles, équipant de préférence des côtés opposés, sont munis d'orifices de fixation 23, par exemple pour des vis 32 (voir en figure 7). Ces ailettes entourent le cadre 21 constitué à titre principal d'une paroi 24 périphérique rectangulaire d'allure normale auxdites ailettes, et par conséquent à la paroi 100 sur laquelle il est fixé.

La paroi périphérique 24 est par ailleurs équipée d'orifices allongés 25 permettant le passage de conduits provenant des circuits hydrauliques de chauffage 4, 5 et d'eau sanitaire 3, et du groupe extérieur de la pompe à chaleur 2. Ce sont en quelque sorte des moyens de guidage des tubulures issues de ces circuits 3 à 5, qui sont de la sorte redirigées vers les moyens de liaison 26, 26' à l'unité 1 qui les concernent. Selon leur positionnement à l'arrivée en provenance desdits circuits, et le robinet 26, 26' des moyens de liaison qui leur est affecté, le choix d'un orifice 25 s'effectue alors naturellement, pour éviter des croisements de conduits potentiellement générateurs de contraintes susceptibles ensuite de susciter des problèmes dans les connexions. Des bras latéraux 27, 27' d'allure horizontale dépassent des faces latérales verticale de la paroi périphérique rectangulaire 24, lesdits bras 27, 27' étant par exemple vissés à ces faces de la paroi 24. Leurs extrémités libres supportent un profilé 28 qui les rejoint et auquel sont fixés les moyens de liaison, l'ensemble constituant la structure de la console 22. Un bac 29 de récupération de liquide est fixé par des moyens conventionnels aux bras 27, 27', sous les moyens de liaison 26, 26', de sorte que si ceux-ci fuient, ou lorsque leur manipulation donne lieu à des rejets de liquide, celui-ci puisse être recueilli et évacué. L'évacuation des liquides recueillis s'effectue par un conduit d'évacuation 30, muni d'un siphon 31 qui fait de préférence partie du bac 29 avec lequel il est d'une seule pièce et qui est connecté en aval à un système d'évacuation des eaux usées du bâtiment.

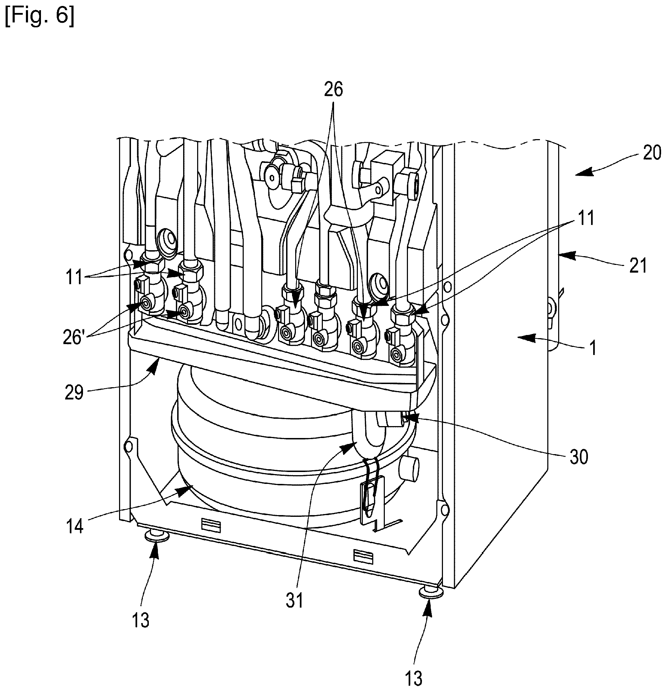

Les moyens de liaison proprement dits consistent en des robinets 26, 26' respectivement dévolus aux circuits hydrauliques 3 à 5 et au circuit frigorifique issu du groupe extérieur 2 de la pompe à chaleur, à raison de deux par circuit, qui bénéficient de ou permettent un raccordement à des connecteurs rapides 11 de l'unité mobile 1, connecteurs 11 facilement accessibles par sa façade dès lors que l'installation est mise en place selon la figure 5, comme en témoigne en particulier la figure 6. Ces connecteurs 11 sont implantés à l'extrémité de conduits de l'unité mobile 1 reliés, pour les départs comme pour les retours, au secondaire du condenseur 7 du circuit hydraulique interne de ladite unité 1, qui véhicule l'eau chauffée par le fluide frigorigène passant dans le primaire du condenseur 7. Les départs sont par conséquent alimentés en eau chaude obtenue via la pompe à chaleur 2, selon les circuits montrés aux figures 1 et 2 décrites ci-dessus. Le circuit d'eau sanitaire comporte une paire de connecteurs 11, de préférence des écrous, respectivement reliés à la sortie d'eau chaude placée en partie supérieure du ballon 6 de chauffage de l'eau de qualité sanitaire et à l'alimentation en eau refroidie positionnée en partie basse de la cuve dudit ballon 6.

L'unité mobile 1 comporte aux moins deux roulettes 12, placées au voisinage de la façade arrière, c'est-à-dire celle qui est située à proximité de la paroi 100 du bâtiment à laquelle est fixée la platine 20. Quatre pieds réglables 13 sont par ailleurs localisés au voisinage des deux façades, celle qui est munie des roulettes 12 et la façade opposée, celle qui fait face à l'utilisateur et est dès lors par exemple munie d'un écran de commande/contrôle. Cette dernière façade comporte des moyens d'ouverture permettant d'avoir accès aux composants du système, en particulier pour réaliser la liaison avec les robinets 26 de la platine 20. Dans la plupart des cas, il s'agit d'un capot amovible.

Le raccordement ne se fait évidemment que lorsque la phase montrée en figure 5 est terminée, et que l'unité mobile 1, légèrement basculée vers l'avant pour reposer sur les roulettes 12 - pouvant alors facilement être poussée en direction de la paroi 100 de l'immeuble (voir la flèche) à laquelle est fixée la platine 20 - est finalement positionnée de sorte que la console 20 munie des robinets 26, 26' pénètre dans l'espace 10 ménagé à cet effet dans l'unité 1. Cette insertion n'est évidemment possible que si la fixation de la platine 20 a été faite à peu près à bonne hauteur, sans quoi aucune correspondance console/espace 10 n'est possible, et le raccordement interne s'avère de facto impossible. En pratique, la platine autorise, par sa conception articulée, un mouvement de plus ou moins 2 cm vers le haut ou vers le bas pour garantir le raccordement, dans la limite de cette plage de tolérance.

Un gabarit de mesure est en pratique fourni avec le dispositif de l'invention, de façon à faciliter les opérations de fixation de la platine 20 au mur. Ce gabarit permet de ne pas prendre de mesures contraignantes, qui représentent toujours un risque plus élevé d'erreur, au moment de la fixation à la paroi 100 de l'immeuble de la platine 20. Il donne les emplacements des perçages à réaliser dans la paroi 100 de l'immeuble, par rapport à une unique dimension bien visible sur le gabarit de montage, de préférence une hauteur fixe de valeur par exemple aisément mesurable, comme 1 mètre. Il suffit donc de positionner la feuille constituant le gabarit de sorte que le trait repérant 1 m soit positionné à 1 m du sol, en respectant l'horizontale.

Lorsque la platine 20 est insérée dans l'espace intérieur 10, les robinets 26, 26' sont raccordés aux conduites intérieures de l'unité mobile 1 via des simples écrous 11, permettant un raccordement très facile et rapide, comme cela ressort de la figure 6. Dans cette version de dispositif selon l'invention, l'espace 10 dévolu à recevoir la platine 20 et ses moyens de liaison 26, 26' surmonte un vase d'expansion 14 nécessaire à une installation avec ballon d'eau chaude 6.

La vue de côté apparaissant à la figure 7 montre qu'à l'état raccordé, une partie de la platine 20 reste à l'extérieur de l'unité mobile 1, ce qui est techniquement nécessaire puisqu'il s'agit notamment de la paroi périphérique 24 du cadre 21 . Des orifices de guidage 25 sont en effet pratiqués dans ladite paroi 24, qui permettent comme on l'a vu l'acheminement des conduits en provenance des différents circuits hydrauliques et frigorifique vers les points de raccordement placés dans l'unité mobile 1, au niveau des écrous 11. La figure 7 montre aussi la fixation de la platine 20 à la paroi 100 du local, par exemple via des vis 32, à bonne hauteur afin que les robinets de liaison 26, 26' soient correctement positionnés par rapport aux tubulures internes de l'unité mobile 1. L'armoire constituant l'unité mobile 1 est représentée, dans les figures 6 et 7, sans capot avant, à des fins purement explicatives, ce qui explique que les composants internes en dépassent. Ce capot avant existe cependant et est prévu amovible afin de pouvoir procéder dans les meilleures conditions aux différents raccordements intérieurs que nécessite la structure particulière de l'invention, en deux parties respectivement fixe (la platine 20), et mobile (l'unité mobile 1).

L'invention ne se limite pas à la configuration décrite en référence aux figures, elle englobe aussi les variantes de forme, et/ou de positionnement, des divers moyens et composants qui la constituent. Ainsi, la platine 20, qui est constituée de tôles découpées et pliées, peut prendre bien d'autres formes, en conservant les fonction qu'elle doit assurer. L'emplacement des orifices de guidage 25, la forme du cadre rectangulaire 21, 24, celle des bras 27, 27' formant la console 22 avec le profilé 28, peuvent bien entendu être différents sans altérer la nature et les fonctions de l'invention.

## Revendications

1. Dispositif de chauffage d'eau à pompe à chaleur pour immeuble, raccordée à au moins un circuit d'eau chaude sanitaire 3 et à au moins un circuit de chauffage 4, 5, et composé d'un module intérieur comportant un ballon 6 d'eau chaude et le condenseur 7 de la pompe à chaleur, et un groupe extérieur 2 de la pompe à chaleur comportant un évaporateur, un réducteur de pression et un compresseur, **caractérisé en ce que** le module intérieur comporte deux parties séparées, une unité mobile 1 sous forme d'une armoire disposée au sol déplaçable et une platine 20 fixe comportant des moyens de solidarisation à une paroi 100 de l'immeuble, ladite platine 20 comportant des moyens de liaison 26, 26' entre l'unité mobile 1 et d'une part les circuits respectivement d'eau chaude sanitaire 3 et de chauffage 4, 5 et d'autre part le groupe extérieur 2 de la pompe à chaleur, l'unité mobile 1 comportant un espace libre 10 à l'intérieur du volume de l'armoire apte à loger ladite platine 20 et débouchant dans la paroi de l'armoire opposée à sa façade.

2. Dispositif de chauffage d'eau selon la revendication précédente, **caractérisé en ce que** la platine 20 fixe comporte des premiers moyens de connexion 26 de tubulures hydrauliques issues des circuits de chauffage 4, 5 et d'eau chaude sanitaire 3 et des conduits correspondants de l'unité mobile 1, et des seconds moyens de connexion 26' séparés pour les tubulures frigorifiques issues du groupe extérieur 2 et les conduits frigorifiques de l'unité mobile 1 reliés au condenseur 7.

3. Dispositif de chauffage d'eau selon la revendication précédente, **caractérisé en ce que** lesdits moyens de connexion consistent en des robinets 26, 26'.

4. Dispositif de chauffage d'eau selon la revendication précédente, **caractérisé en ce que** les robinets 26, 26' comportent un robinet de purge, un clapet anti-retour et des moyens d'isoler de l'unité mobile 1 les circuits de chauffage 4, 5 et d'eau chaude sanitaire 3 d'une part et le groupe extérieur 2 de la pompe à chaleur d'autre part.

5. Dispositif de chauffage d'eau selon l'une des revendications précédentes, **caractérisé en ce que** la platine 20 comporte un cadre 21 muni de moyens de positionnement 23 et de fixation 32 à une paroi P de l'immeuble et une console 22 munie des moyens de liaison 26, 26'.

6. Dispositif de chauffage d'eau selon la revendication précédente, **caractérisé en ce que** la console 22 se développe selon une orientation horizontale, les moyens de liaison 26, 26' étant disposés au voisinage de l'extrémité libre de la console 22.

7. Dispositif de chauffage d'eau selon la revendication précédente, **caractérisé en ce que** l'unité mobile 1 comporte des connecteurs 11 pour le raccordement aux moyens de liaison 26, 26', accessibles par sa façade, et alignés chacun avec un des moyens de liaison 26, 26' lorsque la platine 20 est logée à l'intérieur du volume de l'armoire formant l'unité mobile 1.

8. Dispositif de chauffage d'eau selon l'une des revendications 5 à 7, **caractérisé en ce qu'**une paroi périphérique 24 du cadre de la platine 20 comporte des orifices 25 de passage et de guidage des tubulures issues des circuits de chauffage 4, 5 et d'eau chaude sanitaire 3 d'une part et du groupe extérieur 2 de la pompe à chaleur d'autre part.

9. Dispositif de chauffage d'eau selon l'une des revendications 5 à 8, **caractérisé en ce que** la console 22 comporte un bac 29 situé sous les moyens de liaison 26, 26', et un conduit d'évacuation 30 de liquides, ledit conduit 30 débouchant dans le bac 29.

10. Dispositif de chauffage d'eau selon l'une des revendications précédentes, **caractérisé en ce que** l'unité mobile 1 comporte au moins une paire de roues 12 au voisinage de la paroi de l'unité mobile 1 dans laquelle débouche l'espace libre 10 apte à loger la platine 20.

11. Procédé d'installation dans un immeuble du dispositif de chauffage selon les revendications précédentes, **caractérisé par** :
- utilisation d'un gabarit de mesure donnant la position de fixation des moyens de fixation de la platine 20 par rapport à une mesure de hauteur au sol tracée sur le gabarit ;
- fixation de la platine 20 à la paroi 100 de l'immeuble ;
- raccordement aux moyens de liaison 26, 26' des conduits issus des circuits de chauffage 4, 5 et d'eau chaude sanitaire 2 d'une part et du groupe extérieur 2 de la pompe à chaleur d'autre part ;
- déplacement de l'unité mobile 1 de manière à y loger la platine 20 dans un espace disponible 10 ; et
- raccordement des conduits internes de l'unité mobile 1 aux moyens de liaison 26, 26' de la platine 20.

## Patentansprüche

1. Wasserheizvorrichtung mit Wärmepumpe für ein Gebäude, die an mindestens einen Brauchwarmwasserkreislauf 3 und an mindestens einen Heizkreislauf 4, 5 angeschlossen ist, und aus einem Innenmodul besteht, das einen Warmwasserspeicher 6 und den Kondensator 7 der Wärmepumpe umfasst, und eine Außeneinheit 2 der Wärmepumpe, die einen Verdampfer, einen Druckminderer und einen Kompressor umfasst, **dadurch gekennzeichnet, dass** das Innenmodul zwei separate Teile umfasst, eine mobile Einheit 1 in Form eines Schranks, der auf dem Boden verlagerbar angeordnet ist, und eine feste Platte 20, die Einrichtungen zum Befestigen an einer Wand 100 des Gebäudes umfasst, wobei die Platte 20 Verbindungseinrichtungen 26, 26' zwischen der mobilen Einheit 1 und einerseits dem Brauchwarmwasser- 3 und Heizkreislauf 4, 5, und andererseits der Außeneinheit 2 der Wärmepumpe umfasst, wobei die mobile Einheit 1 einen Freiraum 10 innerhalb des Schrankvolumens umfasst, der die Platte 20 aufnehmen kann und in die Wand des Schranks gegenüber seiner Fassade mündet.

2. Wasserheizvorrichtung nach dem vorhergehenden Anspruch, **dadurch gekennzeichnet, dass** die feste Platte 20 erste Verbindungseinrichtungen 26 von hydraulischen Leitungen umfasst, die vom Heiz- 4, 5 und Brauchwarmwasserkreislauf 3 und entsprechenden Leitungen der mobilen Einheit 1 ausgehen, und zweite Verbindungseinrichtungen 26', die für die Kühlleitungen, die von der Außeneinheit 2 ausgehen, und die Kühlleitungen der mobilen Einheit 1 getrennt sind, die mit dem Kondensator 7 verbunden sind.

3. Wasserheizvorrichtung nach dem vorhergehenden Anspruch, **dadurch gekennzeichnet, dass** die Verbindungseinrichtungen aus Hähnen 26, 26' bestehen.

4. Wasserheizvorrichtung nach dem vorhergehenden Anspruch, **dadurch gekennzeichnet, dass** die Hähne 26, 26' einen Spülhahn, ein Rückschlagventil und Einrichtungen zum Isolieren des Heiz- 4, 5 und des Brauchwarmwasserkreislaufs 3 von der mobilen Einheit 1 einerseits und der Außeneinheit 2 der Wärmepumpe andererseits umfassen.

5. Wasserheizvorrichtung nach einem der vorhergehenden Ansprüche, **dadurch gekennzeichnet, dass** die Platte 20 einen Rahmen 21 umfasst, der mit Einrichtungen zur Positionierung 23 und Befestigung 32 an einer Wand P des Gebäudes versehen ist, und eine Konsole 22, die mit Verbindungseinrichtungen 26, 26' versehen ist.

6. Wasserheizvorrichtung nach dem vorhergehenden Anspruch, **dadurch gekennzeichnet, dass** die Konsole 22 gemäß einer horizontalen Ausrichtung gebildet ist, wobei die Verbindungseinrichtungen 26, 26' benachbart zum freien Ende der Konsole 22 angeordnet sind.

7. Wasserheizvorrichtung nach dem vorhergehenden Anspruch, **dadurch gekennzeichnet, dass** die mobile Einheit 1 Verbinder 11 für den Anschluss an die Verbindungseinrichtungen 26, 26' umfasst, die durch ihre Front zugänglich sind, und jeweils mit einer der Verbindungseinrichtungen 26, 26' ausgerichtet sind, wenn die Platte 20 im Inneren des Schrankvolumens untergebracht ist, das die mobile Einheit 1 bildet.

8. Wasserheizvorrichtung nach einem der Ansprüche 5 bis 7, **dadurch gekennzeichnet, dass** eine Umfangswand 24 des Rahmens der Platte 20 Öffnungen 25 zum Durchgang und Führen der vom Heiz- 4, 5 und Brauchwarmwasserkreislauf 3 ausgehenden Rohre einerseits und der Außeneinheit 2 der Wärmepumpe andererseits umfasst.

9. Wasserheizvorrichtung nach einem der Ansprüche 5 bis 8, **dadurch gekennzeichnet, dass** die Konsole 22 eine Wanne 29 umfasst, die sich unter den Verbindungseinrichtungen 26, 26' befindet, und eine Flüssigkeitsableitungsleitung 30, wobei die Leitung 30 in die Wanne 29 mündet.

10. Wasserheizvorrichtung nach einem der vorhergehenden Ansprüche, **dadurch gekennzeichnet, dass** die mobile Einheit 1 mindestens ein Paar Räder 12 in der Nähe der Wand der mobilen Einheit 1 umfasst, in die der Freiraum 10 mündet, der zum Aufnehmen der Platte 20 geeignet ist.

11. Installationsverfahren der Heizvorrichtung nach den vorhergehenden Ansprüchen in einem Gebäude, **gekennzeichnet durch**:
- Verwendung einer Messschablone, die die Befestigungsposition der Befestigungseinrichtungen der Platte 20 in Bezug auf eine auf der Schablone aufgezeichnete Höhenmessung am Boden angibt;
- Befestigen der Platte 20 an der Wand 100 des Gebäudes;
- Anschluss an die Verbindungseinrichtungen 26, 26' der Leitungen, die einerseits vom Heiz-4, 5 und Brauchwarmwasserkreislauf 2 und von der Außeneinheit 2 der Wärmepumpe andererseits ausgehen;
- Verlagerung der mobilen Einheit 1, um die Platte 20 in einem verfügbaren Raum 10 unterzubringen; und
- Anschluss der internen Leitungen der mobilen Einheit 1 an die Verbindungseinrichtungen 26, 26' der Platte 20.

## Claims

1. A water heating device with a heat pump for a building, connected to at least one domestic hot water circuit 3 and to at least one heating circuit 4, 5, and consisting of an interior module comprising a hot water tank 6 and the condenser 7 of the heat pump, and an exterior unit 2 of the heat pump comprising an evaporator, a pressure reducer and a compressor, **characterised in that** the interior module comprises two separate parts, a mobile unit 1 in the form of a movable cabinet placed on the floor and a fixed plate 20 comprising means for securing to a wall 100 of the building, said plate 20 comprising connection means 26, 26' between the mobile unit 1 and the respective domestic hot water 3 and heating 4, 5 circuits as well as the exterior unit 2 of the heat pump, the mobile unit 1 comprising a free space 10 inside the volume of the cabinet that can accommodate said plate 20 and opening into the wall of the cabinet opposite its front.

2. The water heating device according to the preceding claim, **characterised in that** the fixed plate 20 comprises first connection means 26 for hydraulic pipes coming from the heating 4, 5 and domestic hot water 3 circuits and corresponding conduits of the mobile unit 1, and separate second connection means 26' for the refrigeration pipes coming from the exterior unit 2 and the refrigeration conduits of the mobile unit 1 connected to the condenser 7.

3. The water heating device according to the preceding claim, **characterised in that** said connection means consist of taps 26, 26'.

4. The water heating device according to the preceding claim, **characterised in that** the taps 26, 26' comprise a purge tap, a non-return valve and means for isolating the heating 4, 5 and domestic hot water 3 circuits as well as the exterior unit 2 of the heat pump from the mobile unit 1.

5. The water heating device according to one of the preceding claims, **characterised in that** the plate 20 comprises a frame 21 provided with positioning means 23 and fastening means 32 for positioning and fastening it onto a wall P of the building and a console 22 provided with the connection means 26, 26'.

6. The water heating device according to the preceding claim, **characterised in that** the console 22 extends in a horizontal orientation, the connection means 26, 26' being arranged in the vicinity of the free end of the console 22.

7. The water heating device according to the preceding claim, **characterised in that** the mobile unit 1 comprises connectors 11 for connection to the connection means 26, 26' that are accessible from the front and each aligned with one of the connection means 26, 26' when the plate 20 is accommodated inside the volume of the cabinet that makes up the mobile unit 1.

8. The water heating device according to one of claims 5 to 7, **characterised in that** a peripheral wall 24 of the frame of the plate 20 comprises through-orifices 25 for passing and guiding the pipes coming from the heating 4, 5 and domestic hot water 3 circuits as well as from the exterior unit 2 of the heat pump.

9. The water heating device according to one of claims 5 to 8, **characterised in that** the console 22 comprises a tray 29 located under the connection means 26, 26', and a liquid discharge conduit 30, said conduit 30 opening into the tray 29.

10. The water heating device according to one of the preceding claims, **characterised in that** the mobile unit 1 comprises at least one pair of wheels 12 in the vicinity of the wall of the mobile unit 1 into which the free space 10 suitable for accommodating the plate 20 opens.

11. A method for installing in a building the heating device according to the preceding claims, **characterised by**:
- using a measurement template that provides the position for fastening the fastening means of the plate 20 in relation to a measurement of height above the ground traced on the template;
- fastening the plate 20 to the wall 100 of the building;
- connecting to the connection means 26, 26' the conduits coming from the heating 4, 5 and domestic hot water 2 circuits as well as from the exterior unit 2 of the heat pump;
- moving the mobile unit 1 so as to accommodate the plate 20 therein in an available space 10; and
- connecting the internal conduits of the mobile unit 1 to the connection means 26, 26' of the plate 20.
